# EUROPEAN PATENT SPECIFICATION

(11) **EP 0 610 644 B1**
(45) Date of publication and mention of the grant of the patent: **30.09.1998**
(21) Application number: 93850028.7
(22) Date of filing: 11.02.1993
(51) Int. Cl.: B25B 23/04, B23P 19/00

(54) **Screw positioning and feeding device**
Schrauben Positionier- und Förder-Vorrichtung
Moyens de positionnement et alimentation de vis

(43) Date of publication of application: 17.08.1994
(73) Proprietor: SHEH FUNG SCREWS CO., LTD., Taipei (TW); CHEN ROYALTY N.V., MC-98000 Monte Carlo (MC)
(72) Inventor: Chen, Abraham, Pe-Tou, Taipei (TW)
(74) Representative: Platt, Timothy Nathaniel

(56) References cited:
- EP-A- 0 058 986
- DE-A- 4 208 715
- DE-C- 2 541 046
- US-A- 5 138 913

## Description

The present invention relates to a screw positioning and feeding device, comprising a slide assembly engaging a tape or belt holding a plurality of screws, for feeding, by relative reciprocal movement between the slide assembly and a slide housing, said screws one-by-one to a position to be driven in by a screwdriver bit in a power screwdriver coupled to said device, said slide assembly comprising a pair of sprocket wheels, for advancing said screw tape, said slide assembly having a detachable nose piece containing said sprocket wheels, said slide housing having an arm extending therefrom into the region of the nose piece when said nose piece is coupled in place for operation, said arm having sprocket advancing means at its distal end, which upon relative reciprocal movement between the slide assembly and the slide housing acts to advance the sprocket wheels one screw tape step upon return movement of the slide assembly.

Devices of the above described type, in the form of a unit which can be mounted on a power screwdriver or power drill with a screwdriver bit, have been available for some fifteen years now, to make the job of setting up gypsum board or plywood with screws go much more quickly and easily. Screws can be sold premounted in plastic tape for easy handling. To position screws one-by-one for screwing, the tape or belt is fed through the device, said tape being aligned to successively bring each screw into position for screwing in. Specially designed perforations in the tape, surrounding each screw shark, allow the tape to rupture and the screw head to pass through the enlarged hole as the screw bit screws in the screw. In this type of feeder attachment, sprocket wheels engage notches in the tape or belt and advance the same one screw for every screw that is screwed in.

One example of a previously known device of this type is described in DE 2 541 046 (Helfer). A ratchet wheel 17 cooperates with a sprocket wheel unit 9 to advance a screw tape one screw for each forward movement of the slide housing (see Figs. 1 and 2 in said specification). The ratchet wheel is rotated by a pin 18 following a slot 19 in the slide housing 3. (See Fig. 3). This known device is prone to jamming in the dusty environment in which it is used. Dismantling the device to clean the ratchet wheel, slot and sprocket wheels to remedy this is extremely complicated and time consuming. The ratchet wheel/sprocket wheel coupling is particularly prone to jamming due to dust collection. Also an accidental minimal displacement of the slide assembly into the housing will start to advance the screw tape in the slot and will require that the full movement be completed.

Another such screw feeding apparatus is known from EP 0 058 986 , which reveals a screw feed apparatus having the features disclosed in the preamble to Claim 1. Removal of the nose piece for cleaning has however not been described and the advancing arm does not extend into the slide assembly, it being mounted unprotected on the outside of the slide housing.

These and other disadvantages of the prior art devices are overcome by a screw positioning and feeding device of the type described by way of introduction which is characterized in that said arm extends into said slide assembly, that said sprocket advancing means follows a cam path to advance the sprocket wheels one screw tape step upon return movement of the slide assembly back out of the slide housing, said nose piece being detachable and replaceable, respectively, by displacement transversely to the slide assembly in grooves, said nose piece having an opening to allow the sprocket advancing means of the distal end of the arm to pass out of and into the nose piece as the nose piece is detached and replaced, respectively.

It is thus possible with the device according to the present invention to easily remove the nosepiece to clean the mechanism when dust inevitably has accumulated. The sprocket advancing arm is thus mounted and housed completely separate from the nosepiece.

According to a preferred embodiment of the present invention the sprocket advancing arm is articulated in two portions so that the sprocket advancing means can follow the cam path, moving on its forward stroke out of engagement with the sprockets of the sprocket wheels and on its return stroke in engagement with said sprockets. It is thus possible to have the sprocket advancing means of the arm engage the teeth of the sprocket wheels directly, thus eliminating the ratchet wheel and the pin according to the prior art device. This greatly simplifies the advancing mechanism, making the whole device at the same lime much lighter and narrower, this latter feature being particularly important when using a power screwdriver in comers and other confined spaces. This also makes it possible to move the tape freely in engagement with the sprocket wheels when the sprocket advancing means is in its central neutral position. This facilitates insertion of a new tape and advancement of the tape past defective screws or screws of the wrong length, something which is not possible in the prior art device.

According to a preferred feature of the invention, that portion ion of the articulated arm having the sprocket advancing means is spring biased to a central position extending straight from the other portion of the arm. This simplifies the cam path greatly, and makes possible the use of a simple wing shaped cam element since the distal portion of the arm always strives to return to its central straight position at the forward and rear ends of the cam path. This advantage over the prior art device will be explained in more detail below.

Another important and very advantageous embodiment of the present invention is characterized in that the proximal end of said arm is held by friction in a slot in the slide housing said friction being overcome upon continued relative movement of the slide assembly into the slide housing after the sprocket advancing means has reached its forwardmost position in its cam path, whereupon the proximal end of the arm moves in said slot during said continued relative movement. By having the proximal end of the arm held by friction in a slot it is possible to adjust for different lengths of screws by an extension adjustably fixed to the nose piece. All lengths of screws within a wide range are automatically accommodated for by the friction slot, in contrast to the prior art device which requires a special adapter between the power screwdriver and the screw positioning and feeding device, thus adding considerably to the length and weight of the device. Said special adapter according to the prior art device also prevents rotation of the screw positioning and feeding device relative to the power screwdriver, a feature possible according to the present invention and which is particularly advantageous when screwing screws into corners.

A detailed description of one preferred embodiment of the invention will now be given with reference to the accompanying drawings of which:

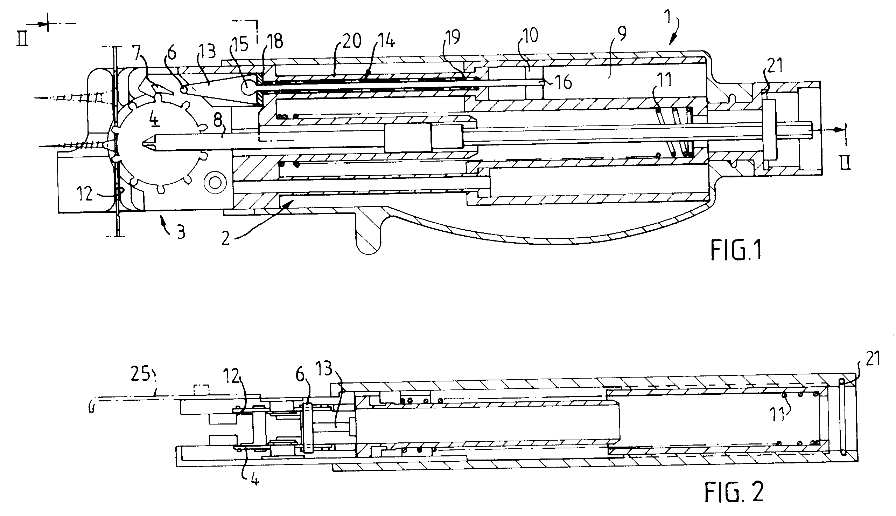

Fig. 1 shows a longitudinal section through a screw positioning and feeding device according to the invention for mounting on a power screwdriver,
Fig. 2 shows a sectional view (II-II in Fig. 1) from above of the device shown in Fig. 1 without the screwdriver bit,

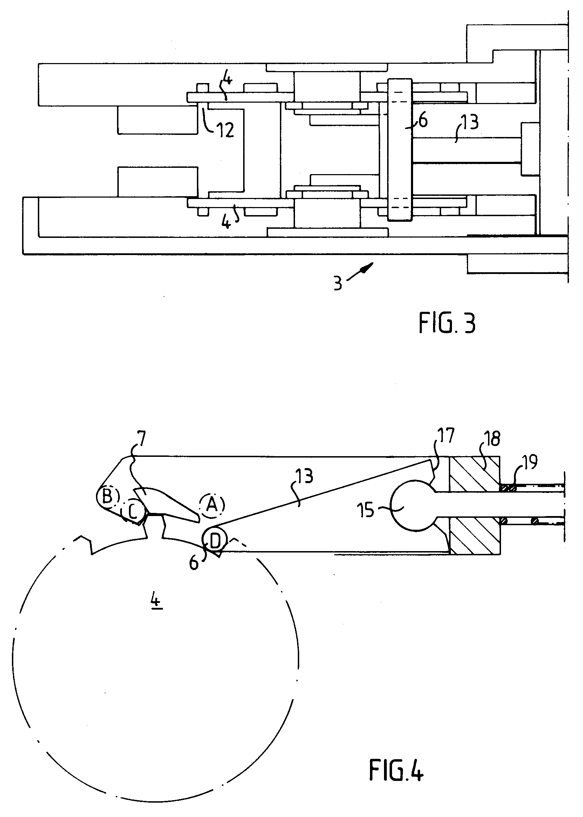

Fig. 3 shows on a larger scale the encircled nosepiece of Fig. 2, and
Fig. 4 shows the functioning of the arm with its sprocket advancing means, the cam and the sprocket wheels.

Fig. 1 shows the screw positioning and feeding device which can be snap mounted on a power screwdriver. The screwdriver bit is held in a chuck. A slide housing 1 holds a slide assembly 2. When a screw is screwed in, the slide assembly, which includes the nosepiece 3, is pushed into the slide housing 1 against the force of the spring 11, as the screwdriver bit rotates, forces the screw head through the tape and drives home the screw. The slide assembly 2 and the slide housing 1 then begin their extension stroke driven by the force of the spring 11. During this stroke the tape is advanced one screw by the sprocket wheels 4 which engage notches spaced on both sides of the tape. The mechanism for advancing the sprocket wheels 4 will be described in detail below.

The arm comprises a forward portion 13 with sprocket advancing means in the form of a cross bar 6 which can engage both sprocket wheels 4 at the same time. The forward portion 13 is articulated at 15 to the rear portion 14 which consists of a rod 16 and a block 10 which can be displaced in a groove 9. The forward end of said groove has inward projections from the sides to delimit the forward movement of the block 10. The wedge-shaped forward portion 13 has a flat rear surface 17 resting, in the neutral position flush against a steel washer 18. A compression spring 19 surrounds the rod 16 and extends compressed inside a tube 20 integral with the slide assembly 2 from the steel washer 18 to the end of the tube 20, which has a hole in it to allow the rod 16 to pass through to the block 10 resting against said inward projections from the sides of the groove. The pressure of the compression spring 19 against the steel washer in contact with the flat rear surface 17 of the wedge-shaped forward portion 13 thus biases the forward portion 13 with its cross bar 6 to a central straight position to which it always strives to return.

Fig 4 shows at A the position of the cross bar 6 at start, when the slide assembly is in its extended rest position. As the nosepiece 3 is pressed against the surface of a sheet of gypsum board for example, the cross bar will ride up the upper surface of the wing-shaped cam 7 since the friction holding the block 10 in the groove is greater than the friction of the cross bar 6 against the cam 7. When the cross bar reaches the forward surface of the wing-shaped cam 7 it will again return to its central straight position B and continue forward until it strikes the forward wall 22 in the nosepiece 3. There the friction of the block 10 in the groove is overcome during continued forward movement of the slide housing and the block 10 will slide backwards in its groove 9 until the screw is fully driven home. This construction with the block in the groove allows for the use of different dimensions of screws using only a slide extension 25 (see Fig. 2) adjustably screwed to the nosepiece.

As the return extension stroke commences, the block 10 moves forward in the groove 9, until it reaches its forward end position abutting against the inward side projections of the groove. The cross piece then begins its return stroke moving first along the forward lower surface of the cam until it reaches point C. At this point, the driver bit 8 has been completely retracted from the tape and the rotation of the sprocket wheels feeding the tape can begin. The cross bar 6 follows the undersurface of the cam 7 until it reaches point D, having pushed the sprocket wheels 4 an angle corresponding to one screw on the tape. At point D, the cross bar is no longer restrained by the cams and returns to its starting position A.

In this starting position A it is possible to freely move the tape in either direction, thereby rotating the sprocket wheels. This makes the tape easier to insert and makes it possible to move the tape past defective screws or screws of the wrong type or dimension. This is impossible in the prior art device.

Fig. 3 reveals the open, easily cleaned construction of the nosepiece 2. The sprocket wheels 4 are mounted on opposite inside walls of the nosepiece with an open interior therebetween. The nosepiece is also open at the bottom and top so that dust will not become trapped therein. The entire nosepiece with sprocket wheels is pulled downwards relative to the rest of the slide assembly and the slide housing to easily remove it therefrom. During removal the crossbar exits through the opening in the top of the nosepiece. To reassemble the device, after cleaning for example, the nosepiece is slotted into grooves in the slide assembly, is pushed upwards and snaps into place.

By virtue of this construction, with a minimum of moving components, i.e. two sprocket wheels 4 in the nosepiece driven directly by the crosspiece 6 on the arm, the entire device can be made much narrower, a feature which is very important especially for screwing in screws in an interior corner.

Returning to Fig. 1, the device is easily snap mounted on the power screwdriver by means of a snapring mounted in a groove 21 at the proximal end of the slide housing 1. This makes the entire device much shorter than the prior art device. This is only possible because the adjustment screws for different lengths of screws can be eliminated from this portion of the device, such adjustment being effected according to the present invention by the adjustment plate 25 on the nosepiece and by the block 10 being able to slide in the groove 9 after the cross piece has reached its forwardmost position B (see Fig. 4).

## Claims

1. Screw positioning and feeding device, comprising a slide assembly (2) engaging a tape or belt holding a plurality of screws, for feeding, by relative reciprocal movement between the slide assembly (2) and a slide housing (1), said screws one-by-one to a position to be driven in by a screwdriver bit (8) in a power screwdriver coupled to said device, said slide assembly comprising a pair of sprocket wheels (4), for advancing said screw tape, said slide assembly having a detachable nose piece (3) containing said sprocket wheels, said slide housing having an arm extending therefrom into the region of the nose piece (3) when said nose piece is coupled in place for operation, said arm having sprocket advancing means (6) at its distal end, which upon relative reciprocal movement between the slide assembly (2) and the slide housing (1) acts to advance the sprocket wheels (4) one screw tape step upon return movement of the slide assembly (2) **chararacterized** in that said arm extends into said slide assembly, that said sprocket advancing means follows a cam path to advance the sprocket wheels (4) one screw tape step upon return movement of the slide assembly (2) back out of the slide housing (1), said nose piece being detachable and replaceable, respectively, by displacement transversely to the slide assembly in grooves, said nose piece having an opening to allow the sprocket advancing means (6) of the distal end of the arm to pass out of and into the nose piece as the nose piece is detached and replaced, respectively.

2. Screw positioning and feeding device according to Claim 1, **characterized** in that said arm is articulated in two portions so that the sprocket advancing means can follow the cam path, moving on its forward stroke out of engagement with the sprockets of the sprocket wheels (4) and on its return stroke in engagement with said sprockets.

3. Screw positioning and feeding device according to Claim 2, **characterized** in that the portion of the articulated arm having the sprocket advancing means is spring biased to a central position extending straight from the other portion of the arm.

4. Screw positioning and feeding device according to Claim 1, **characterized** in that the proximal end of said arm is held by friction in a slot (12) in the slide housing said friction being overcome upon continued relative movement of the slide assembly into the slide housing after the sprocket advancing means has reached its forwardmost position in its cam path, whereupon the proximal end of the arm moves in said slot during said continued relative movement.

5. Screw positioning and feeding device according to Claim 4, **characterized** in that different lengths of screws are accommodated by an extension adjustably fixed to the nose piece.

## Patentansprüche

1. Schraubenpositionier- und fördervorrichtung mit einer Schlittenanordnung (2), die ein eine Vielzahl von Schrauben haltendes Band oder einen Gurt beaufschlagt, zum einzelnen Zuführen besagter Schrauben mittels einor relativen wechselseitigen Bewegung zwischen der Schlittenanordnung (2) und einem Schlittengehäuse (1) in eine Position, in der diese durch eine Schraubenzieherspitze (8) eines an die Vorrichtung angeschlossenen elektrischen Schraubenziehers eingeschraubt werden, wobei die Schlittenanordnung ein Paar Zahntrommeln (4) zum Befördern des Schraubenbandes umfaßt, wobei die Schlittenanordnung ein lösbares Mundstück (3) aufweist, welches die Zahntrommeln enthält, wobei das Schlittengehäuse einen Arm aufweist, der in den Bereich des Mundstückes (3) vorsteht, wenn das Mundstück zum Betätigen angekoppelt ist, wobei der Arm ein Zahnvorschubmittel (6) an seinem distalen Ende aufweist, welches bei einer relativen wechselseitigen Bewegung zwischen der Schlittenanorndung (2) und dem Schlittengehäuse (1) auf eine Rückkehrbewegung der Schlittenanordnung (2) hin einen Vorschub der Zahntrommeln (4) bewirkt,
dadurch gekennzeichnet,
daß der Arm in die Schlittenanordnung vorsteht, daß das Zahnvorschubmittel einer Kurvenbahn folgt, um die Zahntrommeln (4) auf eine Rückwärtsbewegung der Schlittenanordnung (2) hin aus dem Schlittengehäuse (1) heraus einen Schraubenbandschritt weiterzubewegen, wobei das Mundstuck lösbar bzw. austauschbar durch Verschieben in Nuten quer zu der Schlittenanordnung ist, wobei das Mundstück eine Öffnung aufweist, um es dem Zahnvorschubmittel (6) des distalen Endes des Armes zu ermöglichen, sich aus dem Mundstück heraus und in dieses hinein zu bewegen, wenn das Mundstück abgenommen bzw. ausgetauscht ist.

2. Schraubenpositionier- und -fördervorrichtung nach Anspruch 1,
dadurch gekennzeichnet,
daß der Arm in zwei Bereichen gelenkig gelagert ist, so daß das Zahnvorschubmittel der Kurvenbahn folgen kann, wobei sie sich bei der Vorwärtsbewegung aus dem Eingriff mit den Zähnen der Zahntrommeln (4) und bei dessen Rückwärtsbewegung in Eingriff mit den Zähnen bewegen.

3. Schraubenpositionier- und -zuführvorrichtung gemäß Anspruch 2,
dadurch gekennzeichnet,
daß der Bereich des gelenkig angeordneten Arms, der das Zahnvorschubmittel aufweist, in eine mittlere Position vorgespannt ist, die geradlinig von dem anderen Bereich des Arms vorsteht.

4. Schraubenpositionier- und -zuführvorrichtung gemäß Anspruch 1,
dadurch gekennzeichnet,
daß das proximale Ende des Arms durch Reibung in einem Schlitz (12) in dem Schlittengehäuse gehalten wird, wobei die Reibung bei kontinuierlicher Relativbewegung der Schlittenanordnung in das Schlittengehäuse überwunden wird, nachdem das Zahnvorschubmittel seine vorderste Position auf seiner Kurvenbahn erreicht hat, woraufhin sich das proximale Ende des Arms während der genannten Relativbewegung in dem Schlitz bewegt.

5. Schraubenpositionier- und zuführvorrichtung gemäß Anspruch 4,
dadurch gekennzeichnet,
daß mit Hilfe einer am Mundstück festgelegten verstellbaren Verlängerung eine Anpassung an verschiedene Schraubenlängen erhältlich ist.

## Revendications

1. Dispositif d'acheminement et de positionnement de vis, comportant un ensemble de coulisseau (2) venant en prise avec une bande ou courroie supportant plusieurs vis, pour acheminer, par déplacement relatif en va-et-vient entre l'ensemble de coulisseau (2) et un boîtier de coulisseau (1), lesdites vis, une par une, vers une position pour qu'elles soient entraînées par un embout de tournevis (8) d'un tournevis électrique relié audit dispositif, ledit ensemble de coulisseau comportant une paire de roues dentées (4), pour faire avancer ladite bande de vis, ledit ensemble de coulisseau ayant une pièce formant nez détachable (3) contenant lesdites roues dentées, ledit boîtier de coulisseau ayant un bras s'étendant à partir de celui-ci dans la région de la pièce formant nez (3) lorsque ladite pièce formant nez est reliée en place pour un fonctionnement, ledit bras comportant à son extrémité distale des moyens (6) pour faire avancer les dents, qui, lors d'un mouvement relatif en va-et-vient entre l'ensemble de coulisseau (2) et le boîtier de coulisseau (1), agissent pour faire avancer les roues dentées (4) d'un pas de la bande de vis lors d'un mouvement de retour de l'ensemble de coulisseau (2) caractérisé en ce que ledit bras s'étend dans ledit ensemble de coulisseau, en ce que lesdits moyens faisant avancer les dents suivent un trajet de came pour faire avancer les roues dentées (4) d'un pas de la bande de vis lors d'un mouvement de retour dudit ensemble de coulisseau (2) en dehors du boîtier de coulisseau (1), ladite pièce formant nez étant détachable et remplaçable, respectivement, par déplacement transversalement à l'ensemble de coulisseau dans des gorges, ladite pièce formant nez ayant une ouverture pour permettre aux moyens (6) faisant avancer les dents de l'extrémité distale du bras de passer en dehors de la pièce formant nez et dans celle-ci lorsque la pièce formant nez est détachée et remplacée, respectivement.

2. Dispositif d'acheminement et de positionnement de vis selon la revendication 1, caractérisé en ce que ledit bras est articulé en deux parties de sorte que les moyens faisant avancer les dents peuvent suivre le trajet de came, en se déplaçant, sur leur course vers l'avant, sans engagement avec les dents des roues dentées (4) et, lors de leur course de retour, en engagement avec lesdites dents.

3. Dispositif d'acheminement et de positionnement de vis selon la revendication 2, caractérisé en ce que la partie du bras articulé ayant les moyens faisant avancer les dents est rappelée par ressort vers une position centrale s'étendant de manière rectiligne à partir de l'autre partie du bras.

4. Dispositif d'acheminement et de positionnement de vis selon la revendication 1, caractérisé en ce que l'extrémité proximale dudit bras est maintenue par friction dans une fente (12) du boîtier du coulisseau, ladite friction étant surmontée lors d'un mouvement relatif continu de l'ensemble de coulisseau dans le boîtier de coulisseau après que les moyens faisant avancer les dents aient atteint leur position la plus en avant dans leur trajet de came, après quoi l'extrémité proximale du bras se déplace dans ladite fente pendant ledit mouvement relatif continu.

5. Dispositif d'acheminement et de positionnement de vis selon la revendication 4, caractérisé en ce que différentes longueurs de vis sont reçues par un prolongement fixé de manière réglable sur la pièce formant nez.
